# EUROPÄISCHE PATENTSCHRIFT

(11) **EP 3 672 737 B1**
(45) Veröffentlichungstag und Bekanntmachung des Hinweises auf die Patenterteilung: **15.09.2021**
(21) Anmeldenummer: 18825576.4
(22) Anmeldetag: 06.12.2018
(51) Int. Cl.: B07B 1/15, F16C 27/00

(54) **VORRICHTUNG ZUM TRENNEN VON AUFGABEGUT**
DEVICE FOR SEPARATING MATERIAL TO BE FED
DISPOSITIF DE SÉPARATION DE PRODUIT DE CHARGEMENT

(30) Priorität: 20.12.2017 DE 102017011798
(43) Veröffentlichungstag der Anmeldung: 01.07.2020
(73) Patentinhaber: LIG GmbH, 42551 Velbert (DE)
(72) Erfinder: DOPPSTADT, Ferdinand, 42555 Velbert (DE)
(74) Vertreter: Weidener, Jörg Michael
(86) Internationale Anmeldenummer: PCT/EP2018/083866
(87) Internationale Veröffentlichungsnummer: WO 2019/121049

(56) Entgegenhaltungen:
- EP-A1- 3 228 393
- EP-A2- 2 457 671
- CN-A- 107 127 136
- DE-C1- 19 857 498
- DE-U1-202014 105 361

## Beschreibung

Die Erfindung betrifft eine Vorrichtung zum Trennen von Aufgabegut, insbesondere Recyclingmaterial, Bauschutt und/oder Abfallmaterial, vorzugsweise vorgesehen zur Verwendung in einem Steinbruch, mit wenigstens einem, insbesondere als Schneckenwelle ausgebildeten Rotationselement, wobei das Rotationselement ein Kernrohr und einen mit dem Kernrohr verbundenen, insbesondere zumindest im Wesentlichen zylinderförmigen, Lagerzapfen aufweist.

Die Erfindung betrifft insbesondere das technische Gebiet der Sortierung und/oder Klassierung von Aufgabegut, vor allem im Bereich der Abfalltrennung. Eine saubere bzw. hinreichend genaue Trennung des Aufgabegutes in unterschiedliche Fraktionen ergibt die Möglichkeit, unterschiedliche Fraktionen des Aufgabegutes unmittelbar verwerten oder unterschiedlichen Nachbehandlungsverfahren zuführen zu können. So können beispielsweise große und/oder langgestreckte Teile von kleineren Partikeln bzw. Bestandteilen des Aufgabegutes getrennt werden.

Im Zusammenhang mit der Erfindung umfasst der Begriff "Trennen" sowohl das Klassieren als auch das Sortieren. Dabei ist unter Klassieren ein mechanisches Trennverfahren für Feststoffgemische zu verstehen, wobei unterschiedliche geometrische Merkmale, beispielsweise die Größe, für den Trennprozess ausgenutzt werden. Dabei kann eine Aufteilung u.a. in Grob- und Feingut erfolgen. Als Sortieren wird in diesem Zusammenhang ein mechanisches Trennverfahren verstanden, bei dem ein Feststoffgemisch mit unterschiedlichen stofflichen Merkmalen in Fraktionen mit gleichen stofflichen Merkmalen aufgeteilt wird. Zum Sortieren eignen sich beispielsweise die Dichte, Farbe, Form sowie Benetzbarkeit oder Magnetisierbarkeit des Aufgabegutes. Demzufolge umfasst der Begriff Trennung in der vorliegenden Erfindung eine Auftrennung des Aufgabegutes, so dass eine Einteilung in unterschiedliche Fraktionen erfolgen kann. Meist wird diese Trennung bzw. Auftrennung zur Aufbereitung von Recyclingmaterial oder zur Klassierung von zumindest im Wesentlichen festen Material verwendet.

Festes und stückiges Aufgabegut, insbesondere aus dem Bereich der Aufbereitung und des Recyclings von Abfallmaterial, Bauschutt und/oder aus dem Steinbruch stammend, ist durch inhomogene Strukturen gekennzeichnet, wobei Stückgewichte des Aufgabegutes bis in den Bereich von mehreren 100 kg denkbar sind. Zur Trennung solchen Aufgabegutes ist es in der Praxis bekannt, ineinandergreifende, als Schneckenwellen ausgebildete Rotationselemente in einem Flachdeck oder in einer gewölbten Oberfläche anzuordnen. Die vorgenannten Schneckenwellen können dabei einseitig oder beidseitig gelagert werden, so dass bei einer kragenden Halterung der Schneckenwellen ein Abwurf einer Fraktion in Richtung der Drehachsen über das freie Ende der Schneckenwellen ermöglicht wird. Gleichfalls ist die einseitige, kragende Halterung der Schneckenwellen dahingehend vorteilhaft, da so weitestgehend verstopfungsfrei Teile mit längerer Erstreckung, beispielsweise Astwerk von Pflanzen oder Kabel, Leitungen und Rohrstücke, verarbeitbar sind.

Nachteilig bei der bekannten Vorrichtung zum Trennen von Aufgabegut ist, dass diese keine ausreichende Festigkeit gegen Überlast aufweist. Die Überlast kann beispielsweise durch ein erhöhtes Gewicht des Aufgabegutes und/oder durch sehr hohe Querkräfte, die auf die Spiralwellen bzw. Schneckenwellen einwirken, entstehen. Die Querkräfte können sowohl durch einen Fallimpuls des Aufgabegutes bei der Aufgabe/Beschickung hervorgerufen werden als auch durch horizontale Querkräfte in Folge des Zwängens von Aufgabegut durch die Zwischenräume zwischen den Schneckenwellen während des Trennprozesses, insbesondere wenn sich Aufgabegut zwischen den Rotationselementen bzw. Schneckenwellen verkeilt. Demzufolge können an der Vorrichtung Schäden auftreten, die schlimmstenfalls zum Ausfall der Vorrichtung führen.

Die EP 3 228 393 A1 betrifft eine Siebvorrichtung mit mindestens einem an einem Rahmen einseitig gelagerten, rotierenden, langgestreckten Sieborgan. Das Sieborgan weist eine Welle, ein Lagerrohr und ein Drehrohr auf, wobei das Lagerrohr am Rahmen feststehend gehalten ist.

Die EP 2 457 671 A2 betrifft ein Sortiertisch mit Sortierrollen, wobei die Sortierrollen an Endhalterungen gelagert sind.

Die DE 20 2014 105 361 U1 betrifft eine Siebvorrichtung zum Sortieren von Siebgut in eine oder mehrere Feinkornfraktionen und eine oder mehrere Überkornfraktionen.

Die CN 107 127 136 A betrifft eine Sortiervorrichtung mit einer Mehrzahl von Rotationselementen.

Die DE 198 57 498 C1 betrifft eine Walzensieb-Streumaschine zum Klassieren oder Aufstreuen von Holzspähnen, Fasern oder dergleichen. Die Walzensieb-Streumaschine weist zumindestens einen Walzensatz, der sich aus mehreren, achsparallelen nebeneinander angeordneten, gleiche Drehrichtung aufweisenden Walzen zusammensetzt, auf.

Es ist die Aufgabe der vorliegenden Erfindung, eine Vorrichtung zum Trennen der eingangs genannten Art bereitzustellen, die die Nachteile der aus der Praxis bekannten Vorrichtungen vermeidet oder zumindest im Wesentlichen reduziert. Insbesondere ist es die Aufgabe der vorliegenden Erfindung, eine Vorrichtung zum Trennen bereitzustellen, die größeren und/oder hohen Belastungen, wie sie insbesondere bei der Verwendung der Vorrichtung in einem Steinbruch zum Trennen von Erdmaterial auftreten, standhält.

Die vorgenannte Aufgabe ist erfindungsgemäß durch die Trennvorrichtung nach Anspruch 1 gelöst. Erfindungsgemäß ist vorgesehen, dass das Rotationselement über den Lagerzapfen elastisch in einer Dämpfungseinrichtung gelagert ist,und dass die Dämpfungseinrichtung derart ausgebildet ist, dass sie eine elastische Ausweichbewegung des Rotationselementes, insbesondere des Kernrohres, quer zur Drehachse des Rotationselementes zwischen 0,3 und 2 cm pro 1 m Länge des Rotationselementes, ermöglicht.

Bei einer bevorzugten Ausgestaltung der Erfindung, in ist eine Vorrichtung zum Trennen von Aufgabegut, insbesondere Recyclingmaterial, Bauschutt und/oder Abfallmaterial, vorzugsweise zur Verwendung in einem Steinbruch, mit wenigstens zwei, insbesondere als Schneckenwellen ausgebildeten und über ein Stichmaß beabstandeten Rotationselementen vorgesehen, wobei ein Rotationselement ein Kernrohr und einen mit dem Kernrohr verbundenen, insbesondere zumindest im Wesentlichen zylinderförmigen, Lagerzapfen aufweist. Diese Trennvorrichtung ist erfindungsgemäß derart ausgebildet, dass sie ein Verhältnis von dem Durchmesser des Lagerzapfens zu dem Stichmaß größer als 0,3 aufweist bzw. das Verhältnis von dem Durchmesser des Lagerzapfens zu dem Stichmaß größer als 0,3 ausgebildet ist.

Die vorgenannte erfindungsgemäße Lösung hat zur Folge, dass die (Dauer-)Bruchsicherheit gegen Überlastereignisse aus dem Regelbetrieb deutlich erhöht werden kann. Dieser Effekt ergibt sich letztlich durch die Vergrößerung des Verhältnisses des Durchmessers des Lagerzapfens zum Stichmaß zwischen zwei beabstandeten Rotationselementen. Gegenüber dem erfindungsgemäßen Verhältnis war es bisher im Stand der Technik so, dass das Verhältnis des Durchmessers des Lagerzapfens zum Stichmaß im Bereich zwischen 0,2 und 0,25 gelegen hat. In der Praxis gab es bisher ist keine Möglichkeit das vorgenannte Verhältnis auf einen Wert größer 0,25 zu bringen. Grund hierfür ist zum einen die Verwendung eines Halterohres, welches in das Kernrohr eingefasst wird und zum anderen der mangelnde bzw. stark beschränkte Platz zwischen den Rotationselementen im Bereich ihrer Lagerung. In durchgeführten Versuchen konnte gezeigt werden, dass durch eine Vergrößerung des vorgenannten Verhältnisses auf größer 0,3, resultierend insbesondere in einer Vergrößerung des Durchmessers des Lagerzapfens, eine sehr robuste Vorrichtung bereitgestellt werden kann, die gegen hohe Belastungen gesichert ist.

Anders als bisherige Ansätze im Stand der Technik wird erfindungsgemäß in beiden Lösungsvorschlägen kein statisches, nicht drehendes Rohr verwendet. In der Praxis ist zur Abstützung bzw. zur Gewährleistung einer hinreichenden Belastbarkeit gegen Quer- bzw. Spreizkräfte das Halterohr vorgesehen, welches sich zumindest im Wesentlichen über die Länge des Kernrohres erstreckt und in dem Kernrohr angeordnet ist. Dieses Halterohr wird an einer Hauptlagerung an der Einspannseite gelagert. Dabei nimmt das Rohr sowohl die Hauptlagerung des Rotationselementes als auch ein Wälzlager auf. Eine erhebliche Beschränkung im Hinblick auf die Baumaße der Lagereinrichtung ist somit in der Praxis vorhanden, da der nutzbare Außendurchmesser des Halterohres - welches maßgeblich für die statische Stützkraft gegen Querkräfte ist - durch das Lagergehäuse und der auf dem Lagergehäuse befindlichen Kettenradverzahnung beschränkt wird.

Erfindungsgemäß wird bei der eingangs genannten ersten Alternative der Trennvorrichtung die Lagerung des Rotationselementes über eine Dämpfungseinrichtung und über den Lagerzapfen gewährleistet. Dabei ist der Lagerzapfen mit dem Kernrohr verbunden, erstreckt sich jedoch nicht über die Länge des Kernrohres, sondern ist zur Einführung in die bzw. zur Anordnung an die Dämpfungseinrichtung ausgebildet.

In durchgeführten Versuchen wurde festgestellt, dass die erfindungsgemäße Vorrichtung zum Trennen eine doppelt so hohe Lebensdauer bzw. Standzeit als die aus der Praxis bekannten Trennvorrichtungen aufweist. Insbesondere ergibt sich bei der Verwendung der erfindungsgemäßen Trennvorrichtung eine Senkung der laufenden Betriebskosten und eine erhöhte Belastbarkeit im Hinblick auf die beim Trennprozess auftretenden Prozesskräfte.

Im Zusammenhang mit dem Zustandekommen der ersten Lösungsvariante wurde erkannt, dass den hohen, auch in einem Steinbruch auftretenden Beanspruchungen und Belastungen, die während des Betriebs der Vorrichtung zwangsläufig resultieren, standgehalten werden kann und zwar auch bei einer nur einseitigen elastischen Lagerung der Rotationselemente, zumindest sofern die Möglichkeit einer Seitwärtsbewegung der Rotationselemente gegeben ist. Die Erfindung ermöglicht dies durch die Realisierung der elastischen Lagerung des Rotationselementes mittels der Dämpfungseinrichtung. Insbesondere wurde in durchgeführten Versuchen festgestellt, dass durch die elastische Lagerung des Rotationselementes im Vergleich zu den aus der Praxis bekannten Vorrichtungen zum Trennen von Aufgabegut um bis zu 80 % höheren Belastungen Stand gehalten werden kann. Wird zusätzlich auch das erfindungsgemäße Größenverhältnis des Durchmessers des Lagerzapfens zu dem Stichmaß in der Vorrichtung umgesetzt, so kann die Vorrichtung bruchsicher im Vergleich zum Stand der Technik um bis zu 150 % höheren Belastungen ausgesetzt werden. Demzufolge ergibt sich ein synergetischer vorteilhafter Effekt bei Kombination der beiden Ansätze, die jedoch auch jeweils für sich betrachtet vorteilhaft im Hinblick auf die Belastbarkeit der Trennvorrichtung sind.

Durch die erfindungsgemäße Dämpfungseinrichtung wird den, insbesondere trommelartigen, Schneckenwellen bzw. Rotationselementen ermöglicht, temporär auftretenden Reaktionskräften (Quer- bzw. Spreizkräfte) bedarfsweise in jede Richtung quer zur Drehachse, somit insbesondere folglich in radialer Richtung, um einige Millimeter bis Zentimeter auszuweichen. Diese Ausweichbewegung in radialer Richtung wird nachfolgend auch als Winkelversatz bezeichnet, wobei auch der Lagerzapfen erfindungsgemäß die Ausweichbewegung durchführen kann. Selbst kritisches Aufgabegut, insbesondere Steine, deren Durchmesser etwa dem lichten Abstand zwischen zwei unmittelbar benachbarten Spiralwellen bzw. Schneckenwellen entspricht, kann durch die erfindungsgemäße Trennvorrichtung getrennt bzw. klassiert werden.

Darüber hinaus ist die erfindungsgemäße Dämpfungsvorrichtung auch dahingehend vorteilhaft, dass der Impuls, der sich beim Auftreffen von schwerem Aufgabegut auf die Rotationselemente ergibt, gedämpft wird. Aufgrund dieser Eigenschaften zeichnet sich die erfindungsgemäße Vorrichtung insbesondere dadurch aus, dass sie in einem Steinbruch verwendet werden kann, wobei sie insbesondere sowohl klebende und/oder feste Materialien, gegebenenfalls mit inhomogenen Strukturen, als auch gröbere Steine klassieren bzw. trennen kann.

Durch die Dämpfungseinrichtung sowie durch das Durchmesserverhältnis des Lagerzapfens zum Stichmaß wird der Trennbetrieb, insbesondere der Klassierbetrieb, der erfindungsgemäßen Vorrichtung in keiner Weise beeinträchtigt. Bei Verwendung der Dämpfungseinrichtung kehrt das Rotationselement nach einer elastischen Ausweichbewegung in den vorherigen Ausgangszustand zurück. So kann die elastische Dämpfungseinrichtung dazu führen, dass die erfindungsgemäße Vorrichtung zum Trennen eine Dauerbruchsicherheit gegen Überlast bzw. Überlastereignisse aus dem Regelbetrieb aufweist bzw. die Bruchsicherheit deutlich erhöht werden kann.

Bei einer besonders bevorzugten Ausführungsform ist das Rotationselement einseitig gelagert. Insbesondere ist das Rotationselement drehbar über einen Lagerzapfen einseitig gelagert. Eine einseitige Lagerung hat - wie zuvor erwähnt - den wesentlichen Vorteil, dass eine Trennung in drei Fraktionen ermöglicht wird. Dabei kann das Aufgabegut in einem bestimmten Winkel auf mehrere, vorzugsweise in gleicher Drehrichtung drehender, Rotationselemente aufgegeben werden. Aufgrund des Rollbahneffektes wird das Aufgabegut gleichzeitig sowohl in Längsrichtung als auch seitwärts durch die Rotationselemente gefördert. Hierbei fallen alle Teile, die kleiner sind als die konstruktiv vorgegebenen Zwischenräume, die die Trenngröße definieren, zwischen den Rotationselementen hindurch. Langgestreckte, dünne Teile werden in Drehrichtung und dicke, weniger langgestreckte Teile über die frei auslaufenden Wellenenden ausgetragen. Das sogenannte, durch den Zwischenraum gefallene Freikorn kann, wie auch die beiden anderen Fraktionen, mit geeigneten Fördermitteln, insbesondere Förderbändern, unterhalb der Rotationselemente abtransportiert werden.

Bisher ist eine einseitige Lagerung zwar vorteilhaft im Hinblick auf ein Klassierergebnis mit drei Klassierstufen, jedoch nachteilig unter Berücksichtigung der Belastbarkeit. Bei einer beidseitigen Lagerung des Rotationselementes können die auftretenden Prozesskräfte letztlich durch die endseitige Lagerung ausgeglichen werden. Bei einer einseitigen Lagerung ist dies nicht mehr möglich. Gerade bei einer einseitigen Lagerung zeigen sich die erfindungsgemäßen Lösungen als vorteilhaft. So kann durch die elastische Lagerung des Rotationselementes über den Lagerzapfen in der Dämpfungseinrichtung eine Ausweichbewegung des Rotationselementes gewährleistet werden, so dass die im Trennprozess auftretenden Prozesskräfte (Quer- bzw. Spreizkräfte) und die Belastung, die aufgrund des Fallimpulses des Aufgabegutes hervorgerufen wird, durch eine Ausweichbewegung ausgeglichen werden. Auch durch eine Erhöhung des Durchmessers des Lagerzapfens bzw. der Welle im Vergleich zum Stichmaß lässt sich ein möglichst großer, tragender Querschnitt an der für die Biegung höchstbelasteten Stelle am Hauptlager an der Einspannseite sicherstellen.

Des Weiteren ist gemäß einer weiteren bevorzugten Ausführungsform des Erfindungsgedankens vorgesehen, dass der Lagerzapfen und das Kernrohr drehsteif miteinander verbunden sind. Durch dieses Merkmal unterscheidet sich die vorliegende Erfindung maßgeblich von der Verwendung eines feststehenden, inneren Halterohres zur Lagerung des Rotationselementes. Das Halterohr dreht sich letztlich nicht mit, anders als der erfindungsgemäße Lagerzapfen. Durch die drehsteife Verbindung des Lagerzapfens mit dem Kernrohr lässt sich über den Lagerzapfen eine elastische Ausweichbewegung des Rotationselementes ermöglichen. Gleichfalls lässt sich eine dickere Ausbildung des Lagerzapfens bzw. der Welle im Vergleich zum Stand der Technik vorteilhaft umsetzen, da sich ein verbreiteter Lagerzapfen direkt sowie ziel- und zweckgerichtet auf die Belastbarkeit des Kernrohres auswirkt. So leitet letztlich über die Lagerung der Lagerzapfen die auftretenden Beanspruchungen ab und nimmt die an dem Rotationselement angreifenden Biegemomente auf.

Wie zuvor erläutert, ermöglicht eine elastische Lagerung des Rotationselementes über den Lagerzapfen in der Dämpfungseinrichtung eine Ausweichbewegung des Rotationselementes, insbesondere bei Überlast. Erfindungsgemäß ist die Dämpfungseinrichtung derart ausgebildet, dass sie eine elastische Ausweichbewegung des Rotationselementes, insbesondere des Kernrohres, quer zur Drehachse des Rotationselementes zwischen 0,3 und 2 cm pro 1 m Länge des Rotationselementes ermöglicht. Durch die Ausweichbewegung des Rotationselementes lassen sich hohe Querbeanspruchungen bzw. Belastungen bei der Beschickung ausgleichen, da letztlich dem Rotationselement ermöglicht werden kann, diesen Prozesskräften ausweichen zu können. Wäre das Rotationselement nicht elastisch gelagert, so wäre auch keine erfindungsgemäße Ausweichbewegung möglich und die gesamten Beanspruchungen müssten über die Welle und das Rotationselement abgeleitet bzw. abgeführt werden. Daher kann es in der Praxis zu einem Quer- bzw. einem Maschinenbruch bei Überlastereignissen bzw. bei Beschickung mit schwerem Aufgabegut kommen. Erfindungsgemäß kann dies durch die elastische Ausweichbewegung vermieden werden.

Bei einer weiteren Ausführungsform der Erfindung weist die Dämpfungseinrichtung wenigstens ein elastisches Lagermittel auf. Bevorzugt kann die Dämpfungseinrichtung auch zwei elastische Lagermittel aufweisen, die direkt an- bzw. nebeneinander angeordnet sind. Demgemäß können die beiden Lagermittel einander zugewandt sein bzw. aneinander anschlagen und im Bereich der Dämpfungseinrichtung elastisch wirksam ausgebildet sein. Die Lagermittel können die federnd-elastische Wirkung der Aufhängung bzw. Lagerung ermöglichen sowie ebenfalls - zumindest in gewissen Grenzen - die elastische Wirkung bzw. die Federeigenschaften einstellen.

Das elastische Lagermittel kann eine progressive Federkennlinie aufweisen. Eine progressive Kennlinie bzw. ein progressives Kraft-Weg-Gesetz kennzeichnet, dass eine Feder, worum es sich funktional bei dem elastischen Lagermittel handelt, mit steigender Belastung härter wird, um zu verhindern, dass bei starken Belastungen die Feder durchschlägt und/oder um für ein schnelles Abklingen von Schwingungen zu sorgen. Die Härte gibt dabei den mechanischen Widerstand an, den ein Werkstoff der mechanischen Eindringung eines anderen Körpers entgegensetzt. Aufgrund der progressiven Federkennlinie kann die erfindungsgemäße Vorrichtung zum Trennen mittels des elastischen Lagermittels außerordentlichen Spreizkräften standhalten. Das Lagermittel kann den Lagerzapfen umfangsmäßig umgeben, so dass die auftretenden Prozesskräfte über den Lagerzapfen an die Lagermittel und damit an die Dämpfungseinrichtung abgeleitet werden können. Durch das Lagermittel kann ein Elastomerlager ermöglicht werden, wobei es sich versteht, dass das Lagermittel bzw. das Elastomerlager nicht ausschließlich aus elastischem Material bestehen muss. Bei erhöhter Belastung kann insbesondere die Quersteifigkeit des Lagermittels ansteigen.

Zudem ist bei einer weiteren bevorzugten Ausführungsform vorgesehen, dass das Lagermittel zwischen einem äußeren Lagergehäuse und dem Lagerzapfen angeordnet und/oder wirksam ist. Hierbei kann das äußere Lagergehäuse feststehend ausgebildet sein. Gleiches gilt ebenfalls für das Lagermittel, so dass eine Drehung des Lagerzapfens und des Rotationselementes relativ zu dem Lagermittel und dem äußeren Lagergehäuse sichergestellt werden kann. Ferner kann das Lagermittel formschlüssig mit dem äußeren Lagergehäuse verbunden sein und/oder direkt mit seiner Außenseite an dem äußeren Lagergehäuse angeordnet sein. Das Lagergehäuse ist demgemäß auch um den Lagerzapfen umlaufend angeordnet bzw. nimmt diesen gemeinsam mit den Lagermitteln bzw. dem Lagermittel auf.

Im Übrigen kann die Dämpfungseinrichtung eine erste Lagereinrichtung aufweisen. Die Lagereinrichtung ist dabei zur Lagerung des Lagerzapfens und damit einhergehend zur elastischen Lagerung des Rotationselementes ausgebildet. Die erste Lagereinrichtung kann zwischen dem Lagermittel bzw. den Lagermitteln und dem Lagerzapfen angeordnet und/oder wirksam sein. Dabei kann vorgesehen sein, dass die erste Lagereinrichtung den Lagerzapfen vollumfänglich umgibt. Ebenfalls kann die erste Lagereinrichtung auch in dem äußeren Lagergehäuse eingefasst sein. Dabei kann vorgesehen sein, dass der Lagerzapfen zunächst von der ersten Lagereinrichtung, anschließend von den Lagermitteln und schließlich von dem äußeren Gehäuse der Dämpfungseinrichtung umgeben ist. Die erste Lagereinrichtung ist dabei derart ausgebildet, dass sie die erfindungsgemäße Ausweichbewegung des Rotationselementes gewährleisten kann. Des Weiteren kann die erste Lagereinrichtung wenigstens ein Pendellager aufweisen. Bevorzugt ist das Pendellager als Pendelwälzlager und/oder Pendelkugellager ausgebildet.

Als Pendellager werden diejenigen Lager bezeichnet, die aufgrund ihrer Lagereigenschaften nach einer Auslenkung wieder zurück in ihre Ausgangslage geführt werden. Als Pendellager kann beispielsweise ein Pendelkugellager verwendet werden. Pendelkugellager können Kugelreihen aufweisen, insbesondere zwei Kugelreihen, die zwei tiefe Laufrinnen im Lagerinnenring und eine für beide Reihen gemeinsame hohlkugelige Laufbahn im Lageraußenring aufweisen. Sie können sowohl als offene als auch als abgedichtete Lager ausgebildet sein. Die Lager sind winkelbeweglich und unempfindlich gegenüber Schiefstellungen der Welle zum Gehäuse, die zum Beispiel durch Wellendurchbiegungen verursacht werden können. Zudem können sich der Lagerinnenring und der Lageraußenring relativ zueinander bewegen.

Als Wälzlager wird hierbei ein Lager verstanden, bei dem zwischen dem sogenannten Innenring und einem Außenring rollende Körper den Reibungswiderstand verringern. Wälzlager können insbesondere radiale und/oder axiale Kräfte aufnehmen und gleichzeitig die Rotation der Welle oder der so auf einer Achse gelagerten Bauteile ermöglichen. Insbesondere ermöglicht das Wälzlager die drehbare Lagerung der Spiralwelle.

Zudem kann die erste Lagereinrichtung vorzugsweise zwei anstelle von einem Pendellager verwenden. Dies ist insbesondere dahingehend vorteilhaft, da aufgrund einer geringeren Bauhöhe der gesamten Dämpfungseinrichtung der Bauraum für die Wahl einer robusten Welle bzw. eines erhöhten Lagerzapfendurchmessers möglichst groß gewählt werden kann. Würde nur ein Pendelrollenlager verwendet werden, so würde dies eine deutlich höhere Bauhöhe bedingen und somit das Verhältnis des Durchmessers des Lagerzapfens zu dem Stichmaß beschränken. Jedoch beschränkt ein Pendelwälzlager nicht nur den Lagerzapfendurchmesser, der maximal erreichbar ist, sondern auch den Bauraum für die elastische Halterung bzw. die elastische Dämpfungseinrichtung. Beim Zustandekommen der Erfindung wurde letztlich erkannt, dass zwei Pendellager sich besonders für die erfindungsgemäße Dämpfungseinrichtung eignen.

Vorzugsweise ist das äußere Lagergehäuse an einer ersten Lagerwandung eines Maschinengehäuses angeordnet. Das äußere Lagergehäuse kann fest mit der ersten Lagereinrichtung verbunden sein. Des Weiteren kann das äußere Lagergehäuse auch oder alternativ zur Aufnahme des Lagermittels ausgebildet sein. Dabei versteht es sich, dass das Maschinengehäuse, die erste Lagerwandung, das äußere Lagergehäuse sowie die Lagermittel feststehend ausgebildet sind und sich der Lagerzapfen und damit einhergehend das Rotationselement relativ zu den vorgenannten Komponenten der Vorrichtung drehen lässt. Das äußere Lagergehäuse kann an der ersten Lagerwandung formschlüssig und/oder kraftschlüssig angeordnet bzw. befestigt sein. Demgemäß können die über den Lagerzapfen und das Lagermittel auf die erste Lagereinrichtung abgeleiteten Kräfte letztlich über das äußere Lagergehäuse und die erste Lagerwandung an das Maschinengehäuse abgeleitet werden bzw. das Maschinengehäuse sowie die erste Lagereinrichtung können die Prozesskräfte aufnehmen und sind demgemäß derart ausgebildet, dass sie hohen Beanspruchungen standhalten können. Hierdurch ergibt sich im Ergebnis eine sehr robuste Ausgestaltung der erfindungsgemäßen Vorrichtung.

Gemäß einer bevorzugten Ausführungsform des Erfindungsgedankens weist das Lagermittel ein elastisches Material auf. Vorzugsweise ist das elastische Material unbewehrt. Das Lagermittel kann eine zumindest im Wesentlichen ringförmige und/oder hohlzylindrische Form aufweisen. Diese Ausführungsform des Lagermittels passt sich optimal dem zumindest im Wesentlichen zylindrischen Lagerzapfen an, insbesondere wobei stets ein, zumindest mittelbarer, Kontakt zwischen dem Lagermittel und dem Lagerzapfen vorhanden ist. Dabei ordnet sich das Lagermittel, wie bereits erwähnt, umfangsmäßig um den Lagerzapfen an, weshalb sich eine ringförmige Form besonders zur Anordnung an den Lagerzapfen eignet. Daher kann der innere Hohlraum des Lagermittels zur unmittelbaren oder mittelbaren Aufnahme bzw. Anordnung des Lagerzapfens dienen.

In durchgeführten Versuchen wurde festgestellt, dass sich eine ringförmige bzw. hohlzylindrische Form des Lagermittels besonders für die optimalen Eigenschaften der Steifigkeit bzw. der Elastizität des Lagermittels im Hinblick auf die zu erreichende elastische Ausweichbewegung des Rotationsmittels eignet. Je nach Einsatzgebiet der Vorrichtung kann auch die Ringdicke bzw. die Wandstärke des Lagermittels angepasst werden, so dass sie bei Vorrichtungen, die einer größeren Belastung ausgesetzt sind, beispielsweise eine erhöhte Breite aufweisen. Insbesondere ist das Lagermittel als Elastomerlager ausgebildet. Elastomerlager bezeichnen Verformungslager, die die Bewegungen, beispielsweise Verdrehung und Verschiebung, eines Bauteils - das heißt in diesem Fall des Rotationselementes - nicht durch mechanische Konstruktion, sondern durch Verformung des Lagermittels ermöglichen. Grundsätzlich können Verformungslager bewehrt oder auch unbewehrt sein.

Darüber hinaus kann das Lagermittel im Bereich des elastischen Materials eine Ausnehmung aufweisen. Die Ausnehmung kann an der dem Lagerzapfen zugewandten Unterseite des Lagermittels vorgesehen sein. Ferner kann sie auch umlaufend sowie gegebenenfalls spiegelsymetrisch ausgebildet sein, und zwar derart, dass die Spiegelachse quer zur Rotationsachse des Rotationselementes verlaufen kann. Zudem kann die Ausnehmung an der dem Kernrohr abgewandten Seite des Lagermittels angeordnet sein. Sofern zwei Lagermittel verwendet werden, die aneinander angeordnet sind, so ist die Ausnehmung an beiden Lagermitteln derart gewählt, dass sie sich in dem Übergangsbereich der beiden Lagermittel befindet - somit also mittig der aus den Lagermitteln gebildeten eine Lagermitteleinheit angeordnet ist. Eine mittige Anordnung der Ausnehmung an der Lagermitteleinheit ermöglicht, dass an den jeweiligen Endseiten der Lagermittel, die entweder dem Kernrohr zu- oder abgewandt sind, keine Ausnehmung angeordnet ist. Die Ausnehmung kann demgemäß also von den Lagermitteln eingeschlossen werden. Insbesondere dient die Ausnehmung an den Lagermitteln zur sicheren Abstützung der axialen Kräfte bzw. der Prozesskräfte auf den Maschinenrahmen.

Des Weiteren kann die Lagereinrichtung ein weiteres Gehäuse zur Anordnung an das Lagermittel und an die Lageraußenringe des Pendellagers aufweisen. Das weitere Gehäuse kann demgemäß von dem äußeren Lagergehäuse umgeben sein. Zudem kann das weitere Gehäuse derart ausgebildet sein, dass es die Lageraußenringe umfänglich bzw. umfangsmäßig umgibt bzw. einschließt. Außerdem kann das weitere Gehäuse direkt an das Lagermittel angeordnet werden, so dass das Lagermittel über das weitere Gehäuse einen mittelbaren Kontakt zur ersten Lagereinrichtung bzw. zu den Pendellagern und damit einhergehend zu dem Lagerzapfen aufweist.

Besonders bevorzugt weist das weitere Gehäuse einen Vorsprung auf. Der Vorsprung kann dabei umlaufend sowie gegebenenfalls spiegelsymetrisch zu einer Spiegelachse, die insbesondere quer zur Rotationsachse der Spiralwelle verläuft, ausgebildet sein. Des Weiteren kann der Vorsprung zum Eingriff in die Ausnehmung ausgebildet sein. Insbesondere ist der Vorsprung derart ausgebildet, dass eine formschlüssige Verbindung zwischen dem Vorsprung und der Ausnehmung vorgesehen ist. Der Vorsprung kann zur Anordnung von zwei Ausnehmungen von zwei Lagermitteln dienen, die direkt aneinander angeordnet sind. Demgemäß kann zur sicheren Abstützung der axialen Kräfte eine axiale, formschlüssige Ring-Kontur der Lagermittel bereitgestellt werden, wobei das weitere Gehäuse eine innere, radiale Auflagefläche für die Lagermittel bildet und den Formschluss zwischen dem weiteren Gehäuse und den Lagermitteln ermöglicht.

Bei einer weiteren Ausführungsform weist der Lagerzapfen eine Anlageschulter und/oder eine umlaufende weitere Ausnehmung auf. Die Anlageschulter und/oder die weitere Ausnehmung können zur axialen Abstützung der Dämpfungseinrichtung, insbesondere der ersten Lagereinrichtung und/oder des Pendellagers, ausgebildet sein. Dabei ist die Anlageschulter derart ausgebildet, dass sie eine möglicherweise hervorgerufene Kerbwirkung sehr gering hält. Eine Kerbwirkung tritt ülicherweise an eingeschnittenen oder gekerbten Körpern auf, die auf Zug, Scherung oder Torsion belastet werden, was letztlich auch für den Lagerzapfen gilt.

Die Anlageschulter ist zur Anordnung an die erste Lagereinrichtung, insbesondere an das Pendellager, ausgebildet. Über die Anlageschulter erfolgt die Längskraftübertragung des Rotationselementes an die Dämpfungseinrichtung. Die Anlageschulter bzw. die weitere Ausnehmung ist zudem auf Höhe der ersten Lagerwandung an dem Lagerzapfen vorgesehen.

Vorzugsweise ist eine Klemmeinrichtung zur Einstellung der Härte und/oder der elastischen Eigenschaften und/oder der axialen Verspannung, insbesondere zur Erzeugung einer definierten Vorspannung, des Lagermittels vorgesehen. Die Klemmeinrichtung kann einen an dem äußeren Lagergehäuse und an dem Lagermittel angeordneten Klemmring und/oder Verstellschrauben aufweisen. Sowohl der Klemmring als auch die Verstellschrauben können zur Veränderung der axialen Verspannung des Lagermittels verwendet werden. Demzufolge kann die elastische Wirkung des Lagermittels und damit einhergehend der Dämpfungseinrichtung - zumindest in gewissen Grenzen - durch die Klemmvorrichtung einstellbar ausgebildet sein. Je nach Anforderung an die erfindungsgemäße Vorrichtung kann die axiale Verspannung des Lagermittels bzw. der Lagermittel verändert werden. Eine erhöhte Anpressung des Klemmrings an das Lagermittel kann beispielsweise durch ein Anziehen der Verstellschrauben erfolgen, wobei zwischen zwei bis zehn, bevorzugt sechs, Verstellschrauben am Klemmring bzw. an der Klemmeinrichtung angeordnet sein können. Je nach axialer Verspannung des Lagermittels bzw. der Lagermittel kann ein gewisser Abstand zwischen dem äußeren Lagergehäuse und dem Klemmring vorgesehen sein, der insbesondere veränderbar ausgebildet ist.

Weiterhin kann wenigstens ein Kompensationsmittel zur Beabstandung des Lagermittels vorgesehen sein. Das Kompensationsmittel kann an dem Lagermittel und an der dem Lagermittel zugewandten inneren Seitenauflagefläche des äußeren Lagergehäuses angeordnet sein. Die innere Seitenauflagefläche ist ebenfalls dem Kernrohr zugewandt, so dass das Kompensationsmittel, das insbesondere als Passblech ausgebildet ist, zwischen einer inneren Seitenauflagefläche, die dem Kernrohr sowie dem Lagermittel zugewandt ist, und der Seitenfläche des Lagermittels, die der inneren Seitenauflagefläche des Lagergehäuses zugewandt ist, angeordnet sein kann. Das Kompensationsmittel ist insbesondere derart ausgebildet, dass es - je nach Anforderung bzw. Beanspruchung der erfindungsgemäßen Vorrichtung - höhere asymmetrische Verschiebungen verhindern kann. Sofern hohe asymmetrische Verschiebungen des Lagermittels erwartet werden, was letztlich vom Einsatzgebiet der Trennvorrichtung abhängt, so können die Kompensationsmittel zur Gewährleistung eines sicheren Betriebes eingesetzt werden. Letztlich dienen die Kompensationsmittel bzw. Passbleche als Abstandshalter auf der dem Kernrohr zugewandten Seite der Dämpfungseinrichtung.

Vorzugsweise weist das Lagermittel wenigstens ein Material aus Kunststoff und/oder aus einem formfesten und elastisch verformbaren Kunststoff auf. Insbesondere weist das Lagermittel ein Elastomer, bevorzugt ein Kautschukelastomer, weiter bevorzugt Butadien-Acrylnitril-Kautschuk (NBR) und/oder ChloroprenKautschuk (CR) und/oder Ethylen-Propylen-Dien-Kautschuk (EPDM) und/oder Naturkautschuk (NR), Fluorkautschuk (FKM) und/oder Mischpolymerisate, auf. Als Material für das Lagermittel eignet sich ein Material auf Kautschukbasis, da sich dieses bei, insbesondere hohen, Druckbelastungen elastisch verformt, jedoch anschließend - nach Beendigung der Belastung - in seine ursprüngliche, unverformte Gestalt zurückkehrt. Das Elastomerlager ist bevorzugt nahezu inkompressibel ausgebildet, insbesondere wobei es bei einer Druckbelastung volumenkonstant bleibt und bei einer gleichzeitigen Ausdehnung der Seitenflächen federn kann. Zur Festlegung des Materials des Lagermittels können verschiedene charakteristische Bemessungswerte genutzt werden. Beispielsweise zeigt die zulässige Druckspannung, mit welchem maximalen Druck das Lagermittel belastbar ist. So kann das Material des Lagermittels eine zulässige Druckspannung von größer 0,01 N/mm², bevorzugt zwischen 1 bis 50 N/mm², aufweisen.

Zudem ist das elastische Material des Lagermittels derart ausgebildet, dass es eine Shore-Härte von größer als 70 Shore A aufweist. Bevorzugt weist das Material des Lagermittels eine Shore-Härte von größer 80 Shore A, bevorzugt von 80 Shore A bis 75 Shore D und insbesondere von 80 Shore A bis 120 Shore A, auf. Die Shore-Härte ist ein Werkstoffkennwert für Elastomere und Kunststoffe, wie dies insbesondere in den Normen DIN EN ISO 868 und DIN ISO 7619-1 festgelegt ist. Shore A kann für Weich-Elastomere und Shore-D für Zäh-Elastomere genutzt werden. Die vorgenannten Shore-Härten des elastischen Materials des Lagermittels kennzeichnen ein hartes Elastomer.

Bei einer weiteren bevorzugten Ausführungsform der Erfindung wird ein Grundwerkstoff für den Lagerzapfen sowie für das Rotationselement mit einer - im Vergleich zu der Praxis - deutlich erhöhten Festigkeit verwendet. So kann neben der Dämpfungseinrichtung und/oder dem verbreiterten Lagerzapfen im Verhältnis zum Stichmaß ebenso durch eine geeignete Materialwahl erhöhten Beanspruchungen standgehalten werden und folglich wird die Vorrichtung insgesamt robuster ausgestaltet. So kann das Rotationselement und/oder der Lagerzapfen eine Bruchdehnung von größer als 8 %, bevorzugt von größer als 10 %, weiter bevorzugt von 8 % bis 30 % und insbesondere zumindest im Wesentlichen von 15 %, aufweisen. Neben oder ergänzend zu der Bruchdehnung kann das Rotationselement und/oder der Lagerzapfen eine Zugfestigkeit von größer als 600 N/mm², bevorzugt von 600 N/mm² bis 1.700 N/mm², weiter bevorzugt von 750 N/mm² bis 1.300 N/mm² und insbesondere zumindest im Wesentlichen von 900 N/mm², aufweisen. Ferner kann das Material des Rotationselementes und/oder des Lagerzapfens vergütet sein. Durch die Bruchdehnung und/oder die Zugfestigkeit wird ein Grundwerkstoff für den Lagerzapfen bzw. die Welle und/oder für das Rotationselement bereitgestellt, der eine sehr hohe Festigkeit aufweist. Beispielsweise kann ein Chrom-Molybdän-Stahl verwendet werden.

Die Rotationselemente können über eine Antriebseinrichtung miteinander verbunden sein. Die Antriebseinrichtung kann wenigstens ein, insbesondere als Rollenketten ausgebildetes, Verbindungsmittel zum Antrieb der Rotationselemente aufweisen. Vorzugsweise sind jeweils zwei benachbarte Rotationselemente über ein Verbindungsmittel miteinander verbunden, so dass durch Antrieb eines Rotationselementes ein Antrieb von allen Rotationselementen gewährleistet werden kann.

Des Weiteren kann das Rotationselement wenigstens ein Antriebsmittel aufweisen. Das Antriebsmittel kann als eine um die Lagerzapfen angeordnete Zahnradscheibe ausgebildet sein. Zudem kann das Antriebsmittel zur Anordnung des Verbindungsmittels vorgesehen sein, wobei das Antriebsmittel dem Ende des Lagerzapfens zugewandt ist und hinter dem und/oder nachfolgend zu dem Lagermittel und/oder der ersten Lagereinrichtung an dem Lagerzapfen angeordnet sein kann. Die erste Lagereinrichtung kann dem Kernrohr und das Antriebsmittel dem vom Kernrohr abgewandten Ende des Lagerzapfens zugewandt sein. Demgemäß ist das Antriebsmittel nicht mehr auf dem äußeren Gehäuse der Dämpfungseinrichtung, wie dies in der Praxis bisher üblich war, angeordnet, sondern seitlich versetzt zu der ersten Lagereinrichtung und dem äußeren Lagergehäuse. Dadurch erhöht sich der zur Verfügung stehende Platz innerhalb des Stichmaßes zwischen zwei unmittelbar benachbarten Lagerzapfen, da nicht mehr die Kettenrad-Verzahnung auf der Anordnungsebene der Hauptlagerung vorgesehen ist. Demgemäß hat das Antriebsmittel zumindest im Wesentlichen keine Auswirkung mehr im Hinblick auf die Platzkapazität, die sich einschränkend auf den Bauraum für die Dämpfungseinrichtung bzw. für die elastische Lagerung des Rotationselementes auswirken könnte.

Zur definierten Beabstandung des Antriebsmittels von der ersten Lagereinrichtung kann ein Beabstandungsmittel vorgesehen sein. Das Beabstandungsmittel kann zudem auch an dem Lagerzapfen angeordnet sein. Als Beabstandungsmittel kann eine Abstandshülse verwendet werden.

Des Weiteren ist bei einer weiteren bevorzugten Ausführungsform vorgesehen, dass der Lagerzapfen drehbar an einer zweiten Lagerwandung des Maschinengehäuses gelagert ist. Die Lagerung des Lagerzapfens an der zweiten Lagerwandung kann derart ausgebildet sein, dass sie einen Winkelversatz des Lagerzapfens, insbesondere bei einer Ausweichbewegung des Rotationselementes, gewährleistet. Die zweite Lagerwandung ist zur statischen Halterung der Rotationselemente vorgesehen, wobei sie jeweils für ein Rotationselement ein Durchgangsloch zur Anordnung des Lagerzapfens aufweisen kann. Die Lagerung des Lagerzapfens an der zweiten Lagerwandung kann elastisch sein.

Vorzugweise ist eine zweite Lagereinrichtung endseitig an dem Lagerzapfen angeordnet. Die zweite Lagereinrichtung kann zwischen der zweiten Lagerwandung und dem Lagerzapfen wirksam und/oder angeordnet sein. Zudem kann die zweite Lagereinrichtung als Kugel-Pendel-Rollenlager ausgebildet sein. Das erfindungsgemäß eingesetzte Pendel-Wälzlager ist demgemäß derart ausgebildet, dass es das Ende des Lagerzapfens am Maschinengehäuse bzw. an der zweiten Lagerwandung abstützt, wobei gleichzeitig der - geforderte - Winkelversatz des Lagerzapfens aufgrund der erfindungsgemäßen, elastischen Dämpfungseinrichtung gewährleistet werden kann, wobei der Winkelversatz insbesondere bei einer Ausweichbewegung des Rotationselementes beansprucht wird.

Eine axiale Wellensicherung kann an der zweiten Lagerwandung für den Lagerzapfen vorgesehen sein. Die Wellensicherung, die insbesondere in Form eines Seeger-Ringes ausgebildet ist, kann an den Lagerzapfen sowie gegebenenfalls an der zweiten Lagereinrichtung angeordnet sein. Ein mittelbarer oder unmittelbarer Kontakt zu der zweiten Lagerwandung kann über den Lagerzapfen und/oder die zweite Lagereinrichtung gewährleistet werden. Die axiale Wellensicherung kann zur Lagesicherung des Kugel-Pendel-Rollenlagers bzw. des Pendel-Wälzlagers auf den Lagerzapfen ausgebildet sein.

Besonders bevorzugt ist das Verhältnis des Durchmessers des Lagerzapfens zu dem Stichmaß größer 0,35. Vorzugsweise liegt das vorgenannte Verhältnis zwischen 0,3 bis 0,7, weiter bevorzugt zwischen 0,35 bis 0,5. Insbesondere beträgt das Verhältnis zumindest im Wesentlichen 0,4. In durchgeführten Versuchen konnte nachgewiesen werden, dass sich eine deutlich erhöhte Robustheit bzw. Belastbarkeit, insbesondere Widerstandsfähigkeit und/oder Stabilität, ergibt, wenn der Durchmesser des Lagerzapfens und das Stichmaß ein Verhältnis von 0,4 +/- 0,1 zueinander einschließen. Der Lagerzapfen ist hierbei größtmöglich im Hinblick auf das Stichmaß und die geforderten Baumaße für die Dämpfungseinrichtung sowie für das Antriebsmittel ausgebildet. Erfindungsgemäß lässt sich daher ein großer Querschnitt ermöglichen und das insbesondere an derjenigen Stelle des Hauptlagers, die aufgrund der Betriebsweise der Vorrichtung, insbesondere aufgrund des Aufgabeguts, besonders hohen Belastungen ausgesetzt ist.

Darüber hinaus kann der Lagerzapfen einen Durchmesser von größer 75 mm aufweisen. Vorzugsweise ist der Durchmesser größer 80 mm ausgebildet und liegt bevorzugt zwischen 75 bis 120 mm, weiter bevorzugt zwischen 90 bis 100 mm. Jedoch versteht es sich letztlich, dass zur Gewährleistung des erfindungsgemäßen Verhältnisses zwischen dem Durchmesser des Lagerzapfens und dem Stichmaß der Durchmesser des Lagerzapfens in Abhängigkeit des Stichmaßes anders ausgebildet sein kann. Das Stichmaß wird verfahrensgemäß bzw. verfahrensabhängig in Abhängigkeit des Einsatzzweckes und des zu trennenden Aufgabeguts und der aus dem Aufgabegut herauszutrennenden Fraktionen ausgebildet.

Vorzugsweise ist das Stichmaß größer 150 mm. Bevorzugt ist das Stichmaß größer 200 mm und liegt weiter bevorzugt zwischen 150 bis 350 mm, weiter bevorzugt weiter zwischen 200 bis 300 mm. Insbesondere beträgt das Stichmaß 250 mm +/-20 mm.

Spiralförmig um das Kernrohr kann eine Wendel des Rotationselementes verlaufen. Die Wendel kann stegförmig ausgebildet und vorzugsweise fest mit dem Kernrohr verbunden sein. Die Wendeln von unmittelbar benachbarten Rotationselementen sind derart ausgebildet, dass sie ineinandergreifen und demgemäß den gewünschten Trenneffekt erzeugen.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

Es zeigt:
- Fig. 1: eine schematische Aufsicht auf eine erfindungsgemäße Vorrichtung zum Trennen und
- Fig. 2: eine schematische perspektivische Querschnittsansicht eines Teils einer weiteren Ausführungsform der erfindungsgemäßen Vorrichtung zum Trennen.

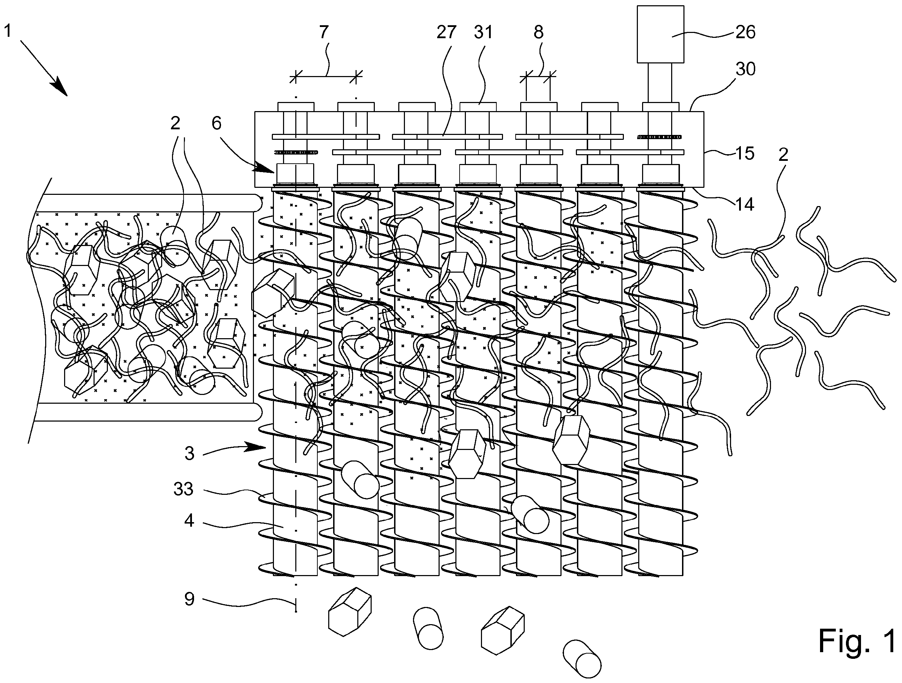

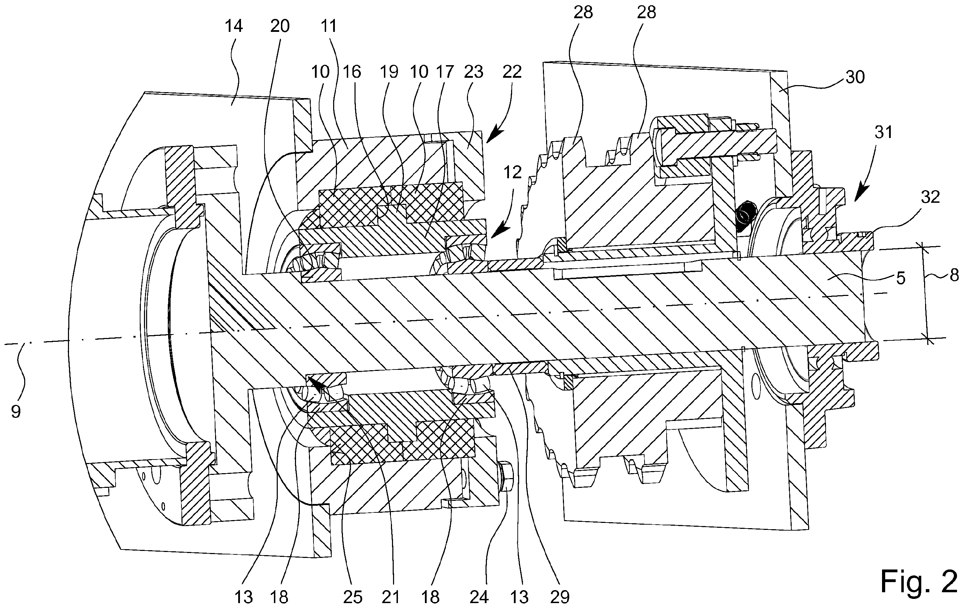

Fig. 1 zeigt eine Vorrichtung 1 zum Trennen von Aufgabegut 2, die wenigstens ein Rotationselement 3 aufweist. In der dargestellten Ausführungsform weist die Vorrichtung 1 sieben Rotationselemente 3 auf. Ferner ist dargestellt, dass das Rotationselement 3 als Schneckenwelle ausgebildet ist. Demzufolge weist das Rotationselement 3 ein Kernrohr 4 auf. In der in Fig. 1 dargestellten Ausführungsform ist spiralförmig um das Kernrohr 4 verlaufend eine Wendel 33 angeordnet, und zwar derart, dass die Wendeln 33 von unmittelbar benachbarten Rotationselementen 3 ineinandergreifen. Das Rotationselement 3 weist weiter einen Lagerzapfen 5 auf, der mit dem Kernrohr 4 verbunden ist. In der dargestellten Ausführungsform, wie aus den Fig. 1 und 2 ersichtlich, ist der Lagerzapfen 5 zumindest im Wesentlichen zylinderförmig ausgebildet.

Die Rotationselemente 3 in Fig. 1 sind in einer Dämpfungseinrichtung 6, die jeweils an einem Rotationselement 3 angeordnet ist, elastisch über den Lagerzapfen 5 gelagert. Die elastische Lagerung über die Dämpfungseinrichtung 6 ist dabei derart ausgebildet, dass Ausweichbewegungen des Rotationselementes 3 möglich sind. Diese Ausweichbewegungen können beispielsweise bei hohen Beanspruchungen der Vorrichtung 1 zum Ausgleich von hohen Spreiz- bzw. Querkräften und/oder zum Ausgleich eines hohen Fallimpulses, der bei der Beschickung mit Aufgabegut 2 auftreten kann, hervorgerufen werden.

Zudem ergibt sich aus Fig. 1, dass zwischen zwei unmittelbar benachbarten Rotationselementen 3 ein Stichmaß 7 vorgesehen ist bzw. zwei unmittelbar benachbarte Rotationselemente 3 über das Stichmaß 7 beabstandet sind. Das Stichmaß 7 erstreckt sich zwischen den Drehachsen 9 der unmittelbar benachbarten Rotationselemente 3. Das Verhältnis des Durchmessers 8 des Lagerzapfens 5 zum Stichmaß 7 ist in der dargestellten Ausführungsform größer als 0,3 ausgebildet. In der dargestellten Ausführungsform ist das Verhältnis des Durchmessers 8 des Lagerzapfens 5 zum Stichmaß 7 zumindest im Wesentlichen 0,4.

Aus Fig. 1 ist ersichtlich, dass das Rotationselement 3 bzw. die Rotationselemente 3 der Vorrichtung 1 einseitig gelagert sind. In weiteren, nicht dargestellten Ausführungsformen kann auch eine beidseitige Halterung bzw. Lagerung der Rotationselemente 3 vorgesehen sein. Das Rotationselement 3 ist über den Lagerzapfen 5 drehbar gelagert. Die Fig. 2 zeigt, dass der Lagerzapfen 5 fest mit dem Kernrohr 4 verbunden ist, wie dies bereits auch aus Fig. 1 ersichtlich ist. Bei Drehung des Lagerzapfens 5 wird demgemäß auch eine Drehung des Kernrohres 4 hervorgerufen und bedingt somit eine Drehung des gesamten Rotationselementes 3. Die drehsteife Verbindung des Lagerzapfens 5 zu dem Kernrohr 4 ermöglicht es, dass der Lagerzapfen 5 die Ausweichbewegung über die Dämpfungseinrichtung 6 des Rotationselementes 3 bzw. des Kernrohres 4 ausgleichen kann, wobei aufgrund der Dämpfungseinrichtung 6 ein Winkelversatz des Lagerzapfens 5 sichergestellt werden kann.

Nicht dargestellt ist, dass die Dämpfungseinrichtung 6 derart ausgebildet ist, dass sie eine elastische Ausweichbewegung des Rotationselementes 3 quer zur Drehachse 9 des Rotationselementes 3 bis zu 3 cm pro 1 m Länge des Rotationselementes 3 ermöglicht (ab der Einspannstelle des Rotationselementes 3). Demgemäß kann die Ausweichbewegung des Rotationselementes 3 von 2 m bis 3 m Länge des Rotationselementes 3 bis zu 9 cm betragen. In weiteren Ausführungsformen kann die Ausweichbewegung zwischen 0,3 und 2 cm pro 1 m Länge des Rotationselementes 3 erfolgen. Die Ausweichbewegung kann von dem Kernrohr 4 durchgeführt werden.

Des Weiteren zeigt Fig. 2, dass wenigstens ein Lagermittel 10 in der Dämpfungseinrichtung 6 angeordnet ist. In der dargestellten Ausführungsform sind zwei symmetrisch zueinander ausgebildete Lagermittel 10 vorgesehen. Die Lagermittel 10 liegen dabei direkt aneinander bzw. liegen stirnseitig aneinander an. Die beiden Lagermittel 10 sind derart ausgebildet, dass sich eine Spiegelsymmetrie zu derjenigen Ebene ergibt, die sich quer zur Drehachse 9 erstreckt und entlang zwischen den Lagermitteln 10 angeordnet ist.

Zudem ist das Lagermittel 10 zwischen einem äußeren Lagergehäuse 11 und dem Lagerzapfen 5 angeordnet bzw. wirksam. Das äußere Lagergehäuse 11 umgibt die Lagermittel 10 umfangsmäßig, wobei sowohl das Lagermittel 10 bzw. die Lagermittel 10 als auch das äußere Lagergehäuse 11 den Lagerzapfen 5 umfangsmäßig umschließen bzw. den Lagerzapfen 5 aufnehmen. Das Lagermittel 10 kann formschlüssig mit dem äußeren Lagergehäuse 11 verbunden sein und/oder, wie aus Fig. 2 ersichtlich, direkt an der inneren Auflagefläche, die den Lagerzapfen 5 zugewandt ist, des äußeren Lagergehäuses 11 angeordnet sein. Sowohl die Lagermittel 10 als auch das äußere Lagergehäuse 11 weisen einen mittelbaren Kontakt zu dem Lagerzapfen 5 auf.

Im Übrigen weist die Dämpfungseinrichtung 6 eine erste Lagereinrichtung 12 auf. Die erste Lagereinrichtung 12 ist in dem dargestellten Ausführungsbeispiel zwischen dem Lagermittel 10 und dem Lagerzapfen 5 angeordnet und/oder wirksam. Dabei kann die erste Lagereinrichtung 12 direkt an der Außenseite des Lagerzapfens 5 angeordnet sein und somit den mittelbaren Kontakt des Lagermittels 10 und des äußeren Lagergehäuses 11 zu dem Lagerzapfen 5 gewährleisten. Die erste Lagereinrichtung 12 ist derart ausgebildet, dass sie einen Winkelversatz des Lagerzapfens 5 bei Ausweichbewegungen des Kernohres 4 gewährleisten kann, die gegebenenfalls auch über die Lagermittel 10 ausgeglichen werden.

In der dargestellten Ausführungsform weist die erste Lagereinrichtung 12 wenigstens ein Pendellager 13 auf. In dem in Fig. 2 gezeigten konkreten Ausführungsbeispiel sind zwei Pendellager 13 vorgesehen, die als Pendelkugellager bzw. Pendelwälzlager ausgebildet sind. Durch die Verwendung von zwei Pendellagern 13 kann der Bauraum, der für das Pendellager 13 verwendet wird, möglichst gering gehalten werden. Die Pendellager 13 sind zudem derart ausgebildet, dass sie die Ausweichbewegung des Lagerzapfens 5 ermöglichen und diese auch ausgleichen bzw. aufnehmen können. Über die Pendellager 13 können die Prozesskräfte, insbesondere die Quer- bzw. Spreizkräfte, sowie gegebenenfalls ein hoher Fallimpuls, der beim Auftreffen von Aufgabegut 2 auf die Vorrichtung 1 vorhanden ist, ausgeglichen werden.

Das äußere Lagergehäuse 11 ist an einer ersten Lagerwandung 14 des Maschinengehäuses 15 angeordnet. Die erste Lagerwandung 14 ist als Flanschplatte ausgebildet und weist zur Aufnahme der Rotationselemente 3 Öffnungen auf. Die erste Lagerwandung 14 kann fest mit dem äußeren Lagergehäuse 11 verbunden sein. Das äußere Lagergehäuse 11 sowie die erste Lagerwandung 14 sind feststehend ausgebildet, das heißt nicht drehsteif mit dem Lagerzapfen 5 oder dem Rotationselement 3 verbunden. Auch das Lagermittel 10 ist nicht drehsteif mit dem Lagerzapfen 5 verbunden. Das äußere Lagergehäuse 11 ist in der dargestellten Ausführungsform zur Aufnahme des Lagermittels 10 ausgebildet. Nicht dargestellt ist, dass das Lagermittel 10 ein elastisches Material aufweist. Dieses Material kann zudem auch unbewehrt ausgebildet sein, so dass ein Elastomerlager über die Lagermittel 10 gewährleistet werden kann. In der dargestellten Ausführungsform sind die Lagermittel 10 ringförmig und/oder hohlzylindrisch ausgebildet. In die somit entstehende Öffnung des Lagermittels 10 kann sowohl ein Teil der ersten Lagereinrichtung 12 und damit ein Teil des Pendellagers 13 sowie der Lagerzapfen 5 angeordnet werden.

Im Übrigen zeigt Fig. 2, dass das Lagermittel 10 im Bereich seines elastischen Materials eine Ausnehmung 16 aufweist. Die Ausnehmung 16 ist in dem dargestellten Ausführungsbeispiel an der dem Lagerzapfen 5 bzw. der ersten Lagereinrichtung 12 zugewandten Unterseite des Lagermittels 10 angeordnet und ist um den Lagerzapfen 5 umlaufend ausgebildet. In dem dargestellten Ausführungsbeispiel weisen beide Lagermittel 10 eine symmetrisch zueinander ausgebildete Ausnehmung 16 auf, so dass sich die zuvor beschriebene Spiegelsymmetrie ergibt. Die beiden Lagermittel 10 ergeben mit ihren jeweiligen Ausnehmungen 16 eine im Querschnitt rechteckförmig ausgebildete Gesamtausnehmung der Lagermittel 10.

Die erste Lagereinrichtung 12 weist ein weiteres Gehäuse 17 zur Anordnung an das Lagermittel 10 und der Lageraußenringe 18 des Pendellagers 13 auf. Das weitere Gehäuse 17 wird an der dem Lagerzapfen 5 zugewandten Unterseite der Lagermittel 10 angeordnet. Das weitere Gehäuse 17 ist umlaufend um den Lagerzapfen 5 ausgebildet, so dass das weitere Gehäuse 17 den Lagerzapfen 5 umfangsmäßig umgibt und einen zumindest mittelbaren Kontakt über die Pendellager 13 zu dem Lagerzapfen 5 aufweist.

Der Lageraußenring 18 kann Teil des Pendellagers 13 und zur Anordnung an die Kugeln des Pendellagers 13 ausgebildet sein. Der Lagerinnenring des Pendellagers 13 kann direkt an der Außenseite des Lagerzapfens 5 angeordnet sein. Der Lageraußenring 18 und der Lagerinnenring des Pendellagers 13 können zueinander beweglich sein. Sie sind durch rollende Körper voneinander getrennt. Bei Betrieb der Vorrichtung 1 rollen diese Walzkörper zwischen dem Innen- und dem Außenring 18 des Pendellagers 13 ab. Der Innenring kann sich mit dem Lagerzapfen 5 mitdrehen. Der Lageraußenring 18 des Pendellagers 13 ist feststehend ausgebildet.

Fig. 2 zeigt, dass das weitere Gehäuse 17 mittig an seiner den Lagermitteln 10 zugewandten Außenseite einen Vorsprung 19 aufweist. Der Vorsprung 19 weist eine zumindest im Wesentlichen rechteckförmige Querschnittsform auf und ist zudem zum Eingriff in die Ausnehmung 16 der Lagermittel 10 ausgebildet. Durch das Zusammenspiel zwischen dem Vorsprung 19 und der Ausnehmung 16 bzw. der Gesamtausnehmung der Lagermittel 10 kann eine axiale, formschlüssige Ring-Kontur zur sicheren Abstützung des Rotationselementes 3 an dem Maschinenrahmen 15 sichergestellt werden.

Der Lagerzapfen 5 weist eine Anlageschulter 20 bzw. eine umlaufende weitere Ausnehmung 21 auf. Die Anlageschulter 20 ist umfangsmäßig umlaufend um den Lagerzapfen 5 vorgesehen. Letztlich stellt die Anlageschulter 20 eine Einkerbung des Lagerzapfens 5 dar und ist zudem zur Anordnung der Dämpfungseinrichtung 6 ausgebildet. An der Anlageschulter 20 wird der Lagerinnenring bzw. die erste Lagereinrichtung 12 sowie das Pendellager 13 angeordnet. Die Anlageschulter 20 ist dabei für die axiale Abstützung der Dämpfungseinrichtung 6 vorgesehen. Durch eine Verbreiterung des Lagerzapfens 5 wird auch die Anlageschulter 20, die für die Prozesskraftübertragung, insbesondere die Längskraftübertragung, ausgebildet ist, möglichst robust ausgeführt, so dass sie hohen Beanspruchungen standhält. Die Kerbwirkung wird dabei sehr gering gehalten, zumindest soweit dies möglich ist.

In dem dargestellten Ausführungsbeispiel ist eine Klemmeinrichtung 22 vorgesehen. Die Klemmeinrichtung 22 dient zur Einstellung der Härte und/oder der elastischen Eigenschaften und/oder der axialen Vorspannung, insbesondere zur Erzeugung einer definierten Vorspannung, des Lagermittels 10 bzw. der Lagermittel 10. Die Klemmeinrichtung 22 ist in dem dargestellten Ausführungsbeispiel an das äußere Lagergehäuse 11 sowie an das der Klemmeinrichtung 22 zugewandte Lagermittel 10 angeordnet. Die Klemmeinrichtung 22 weist zudem einen Klemmring 23 auf, der einen unmittelbaren Kontakt zu wenigstens einem Lagermittel 10 besitzt und über dieses Lagermittel 10 einen mittelbaren Kontakt zu dem zweiten Lagermittel 10 hergestellt. Durch Anziehen bzw. Verspannen des Klemmrings 23, beispielsweise durch die Verstellung der Verstellschrauben 24, lässt sich die axiale Verspannung des Lagermittels 10 bzw. der Lagermittel 10 einstellen sowie verändern. Die Klemmeinrichtung 22 wird dabei nicht im regulären Betrieb der Vorrichtung 1 genutzt, sondern bei Stillstand der Vorrichtung 1 zur Anpassung der Dämpfungseinrichtung 6 an unterschiedliche Einsatzgebiete bzw. an das zu trennende Aufgabegut 2, so dass die Elastizität bzw. die Härte des Lagermittels 10 einstellbar ausgebildet ist, insbesondere in Abhängigkeit der zu erwartenden Belastungen bzw. Beanspruchungen, demgemäß also der zu erwartenden Prozesskräfte (Quer- bzw. Spreizkräfte).

Nicht dargestellt ist, dass ein Kompensationsmittel zur Beabstandung des Lagermittels 10 zu der dem Lagermittel 10 zugewandten inneren Seitenauflagefläche 25 des äußeren Lagergehäuses 11 vorgesehen ist. Fig. 2 zeigt, dass die innere Seitenauflagefläche 25 des äußeren Lagergehäuses 11 dem Kernrohr 4 sowie dem Lagermittel 11 zugewandt ist und zur Anordnung an das Lagermittel 10 ausgebildet ist. Das Kompensationsmittel kann in einem weiteren, nicht dargestellten Ausführungsbeispiel als Passblech ausgebildet sein und den Lagerzapfen 5 umfangsmäßig umgeben, so dass das Passblech eine zumindest im Wesentlichen ringförmige Form aufweist. Das Passblech bzw. Kompensationsmittel ist derart ausgebildet, dass es höhere asymmetrische Verschiebungen verhindert.

Für das Material des Lagermittels 10 kann ein Kunststoff verwendet werden. In weiteren Ausführungsformen wird ein Elastomer, insbesondere Ethylen-Propylen-Dien-Kautschuk (EPDM), Polychloropren, Acrylnitril-Butadien-Kautschuk (NBR), Fluorkautschuk (FKM) und/oder Mischpolymerisate, verwendet. Das elastische Material des Lagermittels 10 kann zudem derart ausgebildet sein, dass es eine Shore-Härte von größer als 70 Shore A aufweist, bevorzugt größer als 80 Shore A, weiter bevorzugt von 80 Shore A bis 75 Shore D und insbesondere von 80 Shore A bis 120 Shore A.

In dem dargestellten Ausführungsbeispiel weisen das Rotationselement 3 und der Lagerzapfen 5 ein Material auf, welches besonders hohen Belastungen sowie Beanspruchungen standhält und zumindest im Wesentlichen bruchfest ausgebildet ist. Hierfür weisen das Rotationselement 3 und der Lagerzapfen 5 eine Bruchdehnung von größer als 8 % sowie eine Zugfestigkeit von größer als 600 N/mm² auf. In weiteren Ausführungsformen können das Rotationselement 3 und/oder der Lagerzapfen 5 eine Bruchdehnung von größer als 10 %, in noch weiteren Ausführungsformen von 8 % bis 30 % und insbesondere zumindest im Wesentlichen von 15 %, aufweisen. Die Zugfestigkeit kann zudem in weiteren, nicht dargestellten Ausführungsbeispielen zwischen 600 N/mm² bis 1.700 N/mm² liegen, weiter bevorzugt zwischen 750 N/mm² bis 1.300 N/mm² liegen und insbesondere zumindest im Wesentlichen 900 N/mm² betragen. Sowohl das Material des Rotationselementes 3 als auch des Lagerzapfen 5 sind in dem dargestellten Ausführungsbeispiel vergütet und weisen einen Chrom-Molybdän-Stahl auf.

Die Fig. 1 zeigt, dass die Rotationselemente 3 über eine Antriebseinrichtung 26 miteinander gekoppelt sind. Die Antriebseinrichtung 26 weist wenigstens ein als Rollenkette ausgebildetes Verbindungsmittel 27 zum Antrieb der Rotationselemente 3 auf. In dem dargestellten Ausführungsbeispiel sind jeweils zwei unmittelbar benachbarte Rotationselemente 3 über ein Verbindungsmittel 27 gekoppelt. Ein Motor der Antriebseinrichtung 26 ist dabei an einem Lagerzapfen 5 eines Rotationselementes 3 angeordnet und über die Verbindungsmittel 27 der Antriebseinrichtung 26 kann ein Antrieb aller Rotationselemente 3 erfolgen.

Zur Anordnung des Verbindungsmittels 27 weist das Rotationselement 3 ein Antriebsmittel 28 auf. In Fig. 2 ist gezeigt, dass das Antriebsmittel 28 als Zahnradscheibe ausgebildet ist bzw. eine äußere Rastverzahnung aufweist, die zum Eingriff in die Rollenkette, das heißt also zum Eingriff in das Verbindungsmittel 27, ausgebildet ist. Das Antriebsmittel 28 ist in der dargestellten Ausführungsform dem dem Kernrohr 4 abgewandten Ende des Lagerzapfens 5 zugewandt sowie nachfolgend bzw. hinter dem Lagermittel 10 und/oder der ersten Lagereinrichtung 12 an dem Lagerzapfen 5 angeordnet. Das Antriebsmittel 28 umgibt den Lagerzapfen 5.

Die Fig. 2 zeigt, dass die erste Lagereinrichtung 12 sowie das äußere Lagergehäuse 11 von dem Antriebsmittel 28 beabstandet sind. Zur Beabstandung ist ein Beabstandungsmittel 29 in Form einer Abstandshülse vorgesehen, wobei das Beabstandungsmittel 29 an dem Lagerzapfen 5 angeordnet ist.

Der Lagerzapfen 5 ist darüber hinaus auch drehbar an einer zweiten Lagerwandung 30 des Maschinengehäuses 15, die in der dargestellten Ausführungsform als Flanschplatte ausgebildet ist, gelagert. Die Lagerung des Lagerzapfens 5 an der zweiten Lagerwandung 30 kann elastisch sein, ermöglicht jedoch auf jeden Fall einen Winkelversatz des Lagerzapfens 5, der letztlich bei einer Ausweichbewegung des Rotationselementes 3 benötigt wird.

Die zweite Lagerwandung 30 weist zudem Öffnungen zur Anordnung des Lagerzapfens 5 auf.

Endseitig ist der Lagerzapfen 5 an der zweiten Lagerwandung 30 über eine zweite Lagereinrichtung 31 gelagert. Die zweite Lagereinrichtung 31 ist in dem dargestellten Ausführungsbeispiel als Kugel-Pendel-Rollenlager ausgebildet und ist zudem zwischen der zweiten Lagerwandung 30 und dem Lagerzapfen 5 wirksam. Die zweite Lagereinrichtung 31 ist darüber hinaus auch fest mit der zweiten Lagerwandung 30 verbunden. Ferner ist die zweite Lagereinrichtung 31 derart ausgebildet, dass sie einen Winkelversatz des Lagerzapfens 5 ermöglicht. An der zweiten Lagereinrichtung 31 sowie an dem Lagerzapfen 5 ist eine axiale Wellensicherung 32 vorgesehen. In dem dargestellten Ausführungsbeispiel ist die axiale Wellensicherung 32 in Form eines Seeger-Ringes ausgebildet. Die axiale Wellensicherung 32 ist letztlich zur Sicherung der zweiten Lagereinrichtung 31 vorgesehen.

Das in dem dargestellten Ausführungsbeispiel gezeigte Verhältnis zwischen dem Durchmesser 8 des Lagerzapfens 5 und dem Stichmaß 7 ist größer 0,35 ausgebildet. In weiteren, nicht dargestellten Ausführungsformen kann das Verhältnis zwischen 0,3 bis 0,7, bevorzugt zwischen 0,35 bis 0,5, liegen.

Des Weiteren weist der Lagerzapfen 5 in dem dargestellten Ausführungsbeispiel einen Durchmesser 8 von 100 mm auf. In weiteren Ausführungsformen kann der Durchmesser 8 größer als 75 mm, bevorzugt größer 80 mm, ausgebildet sein. Insbesondere liegt der Durchmesser 8 des Lagerzapfens 5 zwischen 75 bis 120 mm.

Das Stichmaß 7 beträgt in dem dargestellten Ausführungsbeispiel zumindest im Wesentlichen 250 mm. In weiteren, nicht dargestellten Ausführungsbeispielen kann vorgesehen sein, dass das Stichmaß 7 größer 150 mm, bevorzugt größer 200 mm, ist. In bevorzugten Ausführungsformen kann das Stichmaß 7 zwischen 150 bis 350 mm liegen.

Die Vorrichtung 1 ist aufgrund der einseitigen Lagerung der Rotationselemente 3 zur Trennung des Aufgabeguts 2 in drei Fraktionen ausgebildet. Das Feinkorn kann zwischen den Rotationselementen 3 abgeschieden werden, also durch den Freiraum zwischen zwei unmittelbar benachbarten Kernrohren 4 fallen. Das Überkorn teilt sich in zwei weitere Fraktionen auf; und zwar derart, dass langgestreckte Teile des Aufgabegutes 2 quer zur Drehachse 9 über die Längsseite der Rotationselemente 3 und weniger langgestreckte Teile des Aufgabegutes 2 in Richtung der Drehachse 9 über die freien Enden der Rotationselemente 3 abgeworfen werden können.

### Bezugszeichenliste:

- 1: Vorrichtung zum Trennen
- 2: Aufgabegut
- 3: Rotationselement
- 4: Kernrohr
- 5: Lagerzapfen
- 6: Dämpfungseinrichtung
- 7.: Stichmaß
- 8.: Durchmesser Lagerzapfen
- 9.: Drehachse
- 10.: Lagermittel
- 11.: äußeres Lagergehäuse
- 12.: erste Lagereinrichtung
- 13.: Pendellager
- 14.: erste Lagerwanderung
- 15.: Maschinengehäuse
- 16.: Ausnehmung
- 17.: weiteres Gehäuse
- 18.: Lageraußenring
- 19.: Vorsprung
- 20.: Anlageschulter
- 21.: weitere Ausnehmung
- 22.: Klemmeinrichtung
- 23.: Klemmring
- 24.: Verstellschrauben
- 25.: innere Seitenauflagefläche des äußeren Lagergehäuses
- 26.: Antriebseinrichtung
- 27.: Verbindungsmittel
- 28.: Antriebsmittel
- 29.: Beabstandungsmittel
- 30.: zweite Lagerwandung
- 31.: zweite Lagereinrichtung
- 32.: Wellensicherung
- 33.: Wendel

## Patentansprüche

1. Vorrichtung (1) zum Trennen von Aufgabegut (2), insbesondere Recyclingmaterial, Bauschutt und/oder Abfallmaterial, vorzugsweise vorgesehen zur Verwendung in einem Steinbruch, mit wenigstens einem, insbesondere als Schneckenwelle ausgebildeten Rotationselement (3), wobei das Rotationselement (3) ein Kernrohr (4) und einen mit dem Kernrohr (4) verbundenen, insbesondere zumindest im Wesentlichen zylinderförmigen, Lagerzapfen (5) aufweist,
wobei das Rotationselement (3) über den Lagerzapfen (5) elastisch in einer Dämpfungseinrichtung (6) gelagert ist, **dadurch gekennzeichnet dass** die Dämpfungseinrichtung (6) derart ausgebildet ist, dass sie eine elastische Ausweichbewegung des Rotationselementes (3), insbesondere des Kernrohres (4), quer zur Drehachse (9) des Rotationselementes (3) zwischen 0,3 und 2 cm pro 1 m Länge des Rotationselementes (3) ermöglicht.

2. Vorrichtung (1) nach Anspruch 1, mit wenigstens zwei Rotationselemente, wobei die wenigstens zwei Rotationselemente (3) über ein Stichmaß (7) beabstandet sind, wobei das Verhältnis des Durchmessers (8) des Lagerzapfens (5) zum Stichmaß (7) größer als 0,3 ausgebildet ist.

3. Vorrichtung nach Anspruch 1, **dadurch gekennzeichnet, dass** das Rotationselement (3) einseitig gelagert ist.

4. Vorrichtung nach Anspruch 1 oder 2, **dadurch gekennzeichnet, dass** der Lagerzapfen (5) und das Kernrohr (4) drehsteif miteinander verbunden sind.

5. Vorrichtung nach einem der vorhergehenden Ansprüche, **dadurch gekennzeichnet, dass** die Dämpfungseinrichtung (6) wenigstens ein, bevorzugt zwei, elastische Lagermittel (10) aufweist.

6. Vorrichtung nach Anspruch 5, **dadurch gekennzeichnet, dass** das Lagermittel (10) zwischen einem, insbesondere feststehenden, äußeren Lagergehäuse (11) und dem Lagerzapfen (5) angeordnet und/oder wirksam ist, insbesondere wobei das Lagermittel (10) formschlüssig mit dem äußeren Lagergehäuse (11) verbunden ist.

7. Vorrichtung nach einem der Ansprüche 5 oder 6, **dadurch gekennzeichnet, dass** die Dämpfungseinrichtung (6) eine erste Lagereinrichtung (12) aufweist, insbesondere wobei die erste Lagereinrichtung (12) zwischen dem Lagermittel (10) und dem Lagerzapfen (5) angeordnet und/oder wirksam ist, und/oder dass die erste Lagereinrichtung (12) wenigstens ein, bevorzugt zwei, Pendellager (13), vorzugsweise ein Pendelwälzlager und/oder Pendelkugellager, aufweist.

8. Vorrichtung nach einem der Ansprüche 5 bis 7, **dadurch gekennzeichnet, dass** das äußere Lagergehäuse (11) an einer ersten Lagerwandung (14) eines Maschinengehäuses (15) angeordnet ist, insbesondere wobei das äußere Lagergehäuse (11) fest mit der ersten Lagerwandung (14) verbunden ist und/oder zur Aufnahme des Lagermittels (10) ausgebildet ist.

9. Vorrichtung nach einem der Ansprüche 5 bis 8, **dadurch gekennzeichnet, dass** das Lagermittel (10) im Bereich des elastischen Materials eine Ausnehmung (16) aufweist, insbesondere wobei die Ausnehmung (16) an der dem Lagerzapfen (5) zugewandten Unterseite des Lagermittels (10) vorgesehen ist und/oder umlaufend ausgebildet ist.

10. Vorrichtung nach einem der Ansprüche 7 bis 9, **dadurch gekennzeichnet, dass** die erste Lagereinrichtung (12) ein weiteres Gehäuse (17) zur Anordnung an das Lagermittel (10) und der Lageraußenringe (18) des Pendellagers (13) aufweist, insbesondere wobei das weitere Gehäuse (17) die Lageraußenringe (18) umfangsmäßig umgibt.

11. Vorrichtung nach Anspruch 10, **dadurch gekennzeichnet, dass** das weitere Gehäuse (17) einen, insbesondere umlaufenden, Vorsprung (19) aufweist, insbesondere wobei der Vorsprung (19) zum Eingriff in die Ausnehmung (16) ausgebildet ist.

12. Vorrichtung nach einem der Ansprüche 5 bis 11, **dadurch gekennzeichnet, dass** der Lagerzapfen (5) eine Anlageschulter (20) und/oder eine umlaufende weitere Ausnehmung (21), vorzugsweise vorgesehen für die axiale Abstützung der Dämpfungseinrichtung (6), insbesondere der ersten Lagereinrichtung (12) und/oder des Pendellagers (13), aufweist.

13. Vorrichtung nach einem der Ansprüche 5 bis 12, **dadurch gekennzeichnet, dass** eine Klemmeinrichtung (22) zur Einstellung der Härte und/oder der elastischen Eigenschaften und/oder der axialen Verspannung, insbesondere zur Erzeugung einer definierten Vorspannung, des Lagermittels (10) ausgebildet ist, insbesondere wobei die Klemmeinrichtung (22) einen an dem äußeren Lagergehäuse (11) und an dem Lagermittel (10) angeordneten Klemmring (23) und/oder Verstellschrauben (24), insbesondere zur Veränderung der axialen Verspannung des Lagermittels (10), aufweist, und/oder dass wenigstens ein, insbesondere als Passblech ausgebildetes, Kompensationsmittel zur Beabstandung des Lagermittels (10) zu der dem Lagermittel (10) zugewandten inneren Seitenauflagefläche (25) des äußeren Lagergehäuses (11) vorgesehen ist, wobei die innere Seitenauflagefläche (25) dem Kernrohr (4) zugewandt ist.

14. Vorrichtung nach einem der Ansprüche 5 bis 13, **dadurch gekennzeichnet, dass** das elastische Material des Lagermittels (10) eine Shore-Härte von größer als 70 Shore A, bevorzugt größer 80 Shore A, weiter bevorzugt von 80 Shore A bis 75 Shore D und insbesondere von 80 Shore A bis 120 Shore A, aufweist, und/oder dass das Rotationselement (3) und/oder der Lagerzapfen (5) eine Bruchdehnung von größer als 8 %, bevorzugt von größer als 10 %, weiter bevorzugt von 8 % bis 30 % und insbesondere zumindest im Wesentlichen 15 %, und/oder eine Zugfestigkeit von größer als 600 N/mm², bevorzugt von 600 N/mm² bis 1700 N/mm², weiter bevorzugt von 750 N/mm² bis 1300 N/mm² und insbesondere zumindest im Wesentlichen 900 N/mm², aufweist, insbesondere wobei das Material des Rotationselementes (3) und/oder des Lagerzapfens (5) vergütet ist.

15. Vorrichtung nach einem der Ansprüche 5 bis 14, **dadurch gekennzeichnet, dass** die Rotationselemente (3) über eine Antriebseinrichtung (26) miteinander verbunden sind, wobei die Antriebseinrichtung (26) wenigstens ein insbesondere als Rollenkette ausgebildetes Verbindungsmittel (27) zum Antrieb der Rotationselemente (3) aufweist, und/oder dass an dem Rotationselement (3) wenigstens ein Antriebsmittel (28), insbesondere zur Anordnung des Verbindungsmittels (27), angeordnet ist, insbesondere wobei das Antriebsmittel (28) dem Kernrohr (4) abgewandten Ende des Lagerzapfens (5) zugewandt hinter dem Lagermittel (10) und/oder der ersten Lagereinrichtung (12) an dem Lagerzapfen (5) angeordnet ist.

16. Vorrichtung nach einem der 8 bis 15, **dadurch gekennzeichnet, dass** der Lagerzapfen (5) drehbar an einer zweiten Lagerwandung (30) des Maschinengehäuses (15) gelagert ist und/oder dass eine zweite Lagereinrichtung (31), vorzugsweise als Kugel-Pendel-Rollenlager ausgebildet, endseitig, dem Kernrohr (4) abgewandt an dem Lagerzapfen (5) angeordnet ist, insbesondere wobei die zweite Lagereinrichtung (31) zwischen der zweiten Lagerwandung (30) und dem Lagerzapfen (5) wirksam ist.

17. Vorrichtung nach einem der vorhergehenden Ansprüche, **dadurch gekennzeichnet, dass** das Verhältnis des Durchmessers (8) des Lagerzapfens (5) zu dem Stichmaß (7) größer 0,35 ist, bevorzugt zwischen 0,3 bis 0,7, weiter bevorzugt zwischen 0,35 bis 0,5 liegt und insbesondere zumindest im Wesentlichen 0,4 beträgt, und/oder dass der Lagerzapfen (5) einen Durchmesser (8) von größer 75 mm, bevorzugt größer 80 mm, weiter bevorzugt von 75 bis 120 mm und weiter bevorzugt weiter von 90 bis 100 mm, aufweist und/oder dass das Stichmaß (7) größer 150 mm ist, bevorzugt größer 200 mm, weiter bevorzugt zwischen 150 bis 350 mm, weiter bevorzugt zwischen 200 bis 300 mm liegt und insbesondere zumindest im Wesentlichen 250 mm beträgt.

## Claims

1. Device (1) for separating material to be fed (2), in particular recycling material, building rubble and/or waste material, preferably intended for use in a quarry, having at least one rotary element (3), in particular in the form of a worm shaft, the rotary element (3) having a core tube (4) and a bearing journal (5) connected to the core tube (4), in particular at least substantially in the form of a cylinder, wherein the rotary element (3) is mounted elastically in a damping device (6) via the bearing journal (5),
**characterized in that**
the damping device (6) is designed in such a way that it permits an elastic deflection movement of the rotary element (3), in particular of the core tube (4), transversely to the axis of rotation (9) of the rotary element (3) between 0.3 and 2 cm per 1 m length of the rotary element (3).

2. Device (1) according to claim 1, with at least two rotary elements, wherein the at least two rotary elements (3) are spaced apart by a pitch dimension (7), wherein the ratio of the diameter (8) of the bearing journal (5) to the pitch dimension (7) is designed to be greater than 0.3.

3. Device according to claim 1, **characterized in that** the rotary element (3) is mounted on one side.

4. Device according to claim 1 or 2, **characterized in that** the bearing journal (5) and the core tube (4) are torsionally rigidly connected to each other.

5. Device according to one of the preceding claims, **characterized in that** the damping device (6) comprises at least one, preferably two, elastic bearing means (10).

6. Device according to claim 5, **characterized in that** the bearing means (10) is arranged and/or effective between a, in particular fixed, outer bearing housing (11) and the bearing journal (5), in particular wherein the bearing means (10) is positively connected to the outer bearing housing (11).

7. Device according to one of claims 5 or 6, **characterized in that** the damping device (6) comprises a first bearing device (12), in particular wherein the first bearing device (12) is arranged and/or effective between the bearing means (10) and the bearing journal (5), and/or **in that** the first bearing device (12) comprises at least one, preferably two, self-aligning bearings (13), preferably a self-aligning roller bearing and/or self-aligning ball bearing.

8. Device according to any one of claims 5 to 7, **characterized in that** the outer bearing housing (11) is arranged on a first bearing wall (14) of a machine housing (15), in particular wherein the outer bearing housing (11) is fixedly connected to the first bearing wall (14) and/or is designed to receive the bearing means (10).

9. Device according to one of claims 5 to 8, **characterized in that** the bearing means (10) has a recess (16) in the region of the elastic material, in particular wherein the recess (16) is provided on the underside of the bearing means (10) facing the bearing journal (5) and/or is formed circumferentially.

10. Device according to one of claims 7 to 9, **characterized in that** the first bearing device (12) has a further housing (17) for arrangement on the bearing means (10) and the bearing outer rings (18) of the self-aligning bearing (13), in particular the further housing (17) circumferentially surrounding the bearing outer rings (18).

11. Device according to claim 10, **characterized in that** the further housing (17) has a projection (19), in particular a circumferential projection, in particular wherein the projection (19) is designed to engage in the recess (16).

12. Device according to one of claims 5 to 11, **characterized in that** the bearing journal (5) has an abutment shoulder (20) and/or a circumferential further recess (21), preferably provided for axial support of the damping device (6), in particular of the first bearing device (12) and/or of the self-aligning bearing (13).

13. Device according to one of the claims 5 to 12, **characterized in that** a clamping device (22) is designed for adjusting the hardness and/or the elastic properties and/or the axial tension, in particular for producing a defined pretension, of the bearing means (10), in particular the clamping device (22) having a clamping ring (23) and/or adjusting screws (24) arranged on the outer bearing housing (11) and on the bearing means (10), in particular for changing the axial tension of the bearing means (10), and/or **in that** at least one compensation means, in particular in the form of a shim, is provided for spacing the bearing means (10) from the inner side bearing surface (25) of the outer bearing housing (11) facing the bearing means (10), the inner side bearing surface (25) facing the core tube (4).

14. Device according to any one of claims 5 to 13, **characterized in that** the elastic material of the bearing means (10) has a Shore hardness of greater than 70 Shore A, preferably greater than 80 Shore A, more preferably from 80 Shore A to 75 Shore D and in particular from 80 Shore A to 120 Shore A, and/or that the rotary element (3) and/or the bearing journal (5) has an elongation at break of greater than 8 %, preferably greater than 10 %, further preferably from 8 % to 30 % and in particular at least substantially 15 %, and/or a tensile strength greater than 600 N/mm², preferably from 600 N/mm² to 1700 N/mm², further preferably from 750 N/mm² to 1300 N/mm² and in particular at least substantially 900 N/mm², in particular wherein the material of the rotary element (3) and/or the bearing journal (5) is quenched and tempered.

15. Device according to one of the claims 5 to 14, **characterized in that** the rotary elements (3) are connected to one another via a drive device (26), the drive device (26) having at least one connecting means (27), in particular in the form of a roller chain, for driving the rotary elements (3), and/or **in that** at least one drive means (28), in particular for arranging the connecting means (27), is arranged on the rotary element (3), in particular wherein the drive means (28), facing away from the core tube (4), is arranged behind the bearing means (10) and/or the first bearing device (12) on the bearing journal (5).

16. Device according to one of the 8 to 15, **characterized in that** the bearing journal (5) is rotatably mounted on a second bearing wall (30) of the machine housing (15) and/or **in that** a second bearing device (31), preferably designed as a ball pendulum roller bearing, is arranged at the end of the bearing journal (5) facing away from the core tube (4), in particular the second bearing device (31) being effective between the second bearing wall (30) and the bearing journal (5).

17. Device according to one of the preceding claims, **characterized in that** the ratio of the diameter (8) of the bearing journal (5) to the pitch dimension (7) is greater than 0.35, preferably between 0.3 to 0.7, more preferably between 0.35 to 0.5 and in particular is at least substantially 0.4, and/or that the bearing journal (5) has a diameter (8) of greater than 75 mm, preferably greater than 80 mm, further preferably from 75 to 120 mm and further preferably from 90 to 100 mm, and/or that the pitch dimension (7) is greater than 150 mm, preferably greater than 200 mm, further preferably between 150 to 350 mm, further preferably between 200 to 300 mm and in particular is at least substantially 250 mm.

## Revendications

1. Dispositif (1) de séparation de produit de chargement (2), en particulier un produit de recyclage, des gravats et/ou des déchets, de préférence destiné à être utilisé dans une carrière de pierre, avec au moins un élément rotatif (3), en particulier sous la forme d'un arbre à vis sans fin, l'élément rotatif (3) présentant un tube central (4) et un tourillon de palier (5) relié au tube central (4), en particulier au moins sensiblement sous la forme d'un cylindre, dans lequel l'élément rotatif (3) est monté élastiquement dans un dispositif d'amortissement (6) par l'intermédiaire du tourillon de palier (5),
**caractérisé en ce que**
le dispositif d'amortissement (6) est conçu de telle sorte qu'il permet un mouvement de déviation élastique de l'élément rotatif (3), en particulier du tube central (4), transversalement à l'axe de rotation (9) de l'élément rotatif (3) entre 0,3 et 2 cm par 1 m de longueur de l'élément rotatif (3).

2. Dispositif (1) selon la revendication 1, comportant au moins deux éléments de rotation, les au moins deux éléments rotatifs (3) étant espacés d'un pas (7), le rapport entre le diamètre (8) du tourillon de palier (5) et le du pas (7) étant supérieur à 0,3.

3. Dispositif selon la revendication 1, **caractérisé en ce que** l'élément rotatif (3) est monté sur un côté.

4. Dispositif selon la revendication 1 ou 2, **caractérisé en ce que** le tourillon de palier (5) et le tube central (4) sont reliés l'un à l'autre de manière rigide en torsion.

5. Dispositif selon l'une des revendications précédentes, **caractérisé en ce que** le dispositif d'amortissement (6) comprend au moins un, de préférence deux, moyens de palier (10).

6. Dispositif selon la revendication 5, **caractérisé en ce que** le moyen de palier (10) est disposé et/ou actif entre un logement de palier extérieur (11), en particulier fixe, et le tourillon de palier (5), en particulier dans lequel le moyen de palier (10) est relié par complémentarité de forme au logement de palier extérieur (11).

7. Dispositif selon l'une des revendications 5 ou 6, **caractérisé en ce que** le dispositif d'amortissement (6) comprend un premier dispositif de palier (12), en particulier dans lequel le premier dispositif de palier (12) est disposé et/ou efficace entre le moyen de palier (10) et le tourillon de palier (5), et/ou **en ce que** le premier dispositif de palier (12) comprend au moins un, de préférence deux, paliers à alignement automatique (13), de préférence un palier auto-aligneur et/ou un palier à billes auto-aligneur.

8. Dispositif selon l'une quelconque des revendications 5 à 7, **caractérisé en ce que** le logement de palier extérieur (11) est disposé sur une première paroi de palier (14) d'un boîtier de machine (15), en particulier dans lequel le logement de palier extérieur (11) est relié de manière fixe à la première paroi de palier (14) et/ou est conçu pour recevoir le moyen de palier (10).

9. Dispositif selon l'une des revendications 5 à 8, **caractérisé en ce que** le moyen de palier (10) présente un évidement (16) dans la zone du matériau élastique, en particulier dans lequel l'évidement (16) est prévu sur la face inférieure du moyen de palier (10) tournée vers le tourillon de palier (5) et/ou est formé de manière périphérique.

10. Dispositif selon l'une quelconque des revendications 7 à 9, **caractérisé en ce que** le premier dispositif de palier (12) présente un autre boîtier (17) destiné à être disposé sur le moyen de palier (10) et les bagues extérieures de palier (18) du palier à alignement automatique (13), en particulier l'autre boîtier (17) entourant circonférentiellement les bagues extérieures de palier (18).

11. Dispositif selon la revendication 10, **caractérisé en ce que** l'autre boîtier (17) présente une saillie (19), en particulier une saillie périphérique, en particulier dans lequel la saillie (19) est conçue pour s'engager dans l'évidement (16).

12. Dispositif selon l'une des revendications 5 à 11, **caractérisé en ce que** le tourillon de palier (5) présente un épaulement de butée (20) et/ou un autre évidement (21) périphérique, de préférence prévu pour l'appui axial du dispositif d'amortissement (6), en particulier du premier dispositif de palier (12) et/ou du palier à alignement automatique (13).

13. Dispositif selon l'une des revendications 5 à 12, **caractérisé en ce qu'**un dispositif de serrage (22) est conçu pour le réglage de la dureté et/ou des propriétés élastiques et/ou de la tension axiale, en particulier pour la production d'une précontrainte définie, du moyen de palier (10), le dispositif de serrage (22) présentant en particulier une bague de serrage (23) et/ou des vis de réglage (24) disposées sur le logement de palier extérieur (11) et sur le moyen de palier (10), en particulier pour modifier la tension axiale du moyen de palier (10), et/ou **en ce qu'**au moins un moyen de compensation, en particulier sous la forme d'une cale, est prévu pour écarter le moyen de palier (10) de la surface d'appui latérale intérieure (25) du logement de palier extérieur (11) tournée vers le moyen de palier (10), la surface d'appui latérale intérieure (25) étant tournée vers le tube central (4).

14. Dispositif selon l'une quelconque des revendications 5 à 13, **caractérisé en ce que** le matériau élastique du moyen de palier (10) présente une dureté Shore supérieure à 70 Shore A, de préférence supérieure à 80 Shore A, plus préférentiellement de 80 Shore A à 75 Shore D et en particulier de 80 Shore A à 120 Shore A, et/ou que l'élément rotatif (3) et/ou le tourillon de palier (5) présente un allongement à la rupture supérieur à 8 %, de préférence supérieure à 10%, de préférence encore de 8% à 30% et en particulier au moins sensiblement 15%, et/ou une résistance à la traction supérieure à 600 N/mm², de préférence de 600 N/mm² à 1700 N/mm², de préférence encore de 750 N/mm² à 1300 N/mm² et en particulier au moins sensiblement 900 N/mm², en particulier dans lequel le matériau de l'élément rotatif (3) et/ou du tourillon de palier (5) est trempé et revenu.

15. Dispositif selon l'une des revendications 5 à 14, **caractérisé en ce que** les éléments rotatifs (3) sont reliés entre eux par l'intermédiaire d'un dispositif d'entraînement (26), le dispositif d'entraînement (26) présentant au moins un moyen de liaison (27), en particulier sous la forme d'une chaîne à rouleaux, pour entraîner les éléments rotatifs (3), et/ou **en ce qu'**au moins un moyen d'entraînement (28), en particulier pour la disposition des moyens de liaison (27), est disposé sur l'élément rotatif (3), le moyen d'entraînement (28) étant en particulier disposé à l'extrémité du tourillon de palier (5), à l'opposé du tube central (4), derrière le moyen de palier (10) et/ou le premier dispositif de palier (12) sur le tourillon de palier (5).

16. Dispositif selon l'un des 8 à 15, **caractérisé en ce que** le tourillon de palier (5) est monté à rotation sur une deuxième paroi de palier (30) du boîtier de machine (15) et/ou **en ce qu'**un deuxième dispositif de palier (31), réalisé de préférence sous forme de roulement à billes, est disposé à l'extrémité du tourillon de palier (5) opposée au tube central (4), le deuxième dispositif de palier (31) agissant en particulier entre la deuxième paroi de palier (30) et le tourillon de palier (5).

17. Dispositif selon l'une quelconque des revendications précédentes, **caractérisé en ce que** le rapport entre le diamètre (8) du tourillon de palier (5) et le du pas (7) est supérieur à 0,35, de préférence compris entre 0,3 et 0,7, plus préférentiellement compris entre 0,35 et 0,5 et en particulier est au moins sensiblement égal à 0,4, et/ou **en ce que** le tourillon de palier (5) a un diamètre (8) supérieur à 75 mm, de préférence supérieure à 80 mm, de préférence encore de 75 à 120 mm et de préférence encore de 90 à 100 mm, et/ou **en ce que** le pas (7) est supérieure à 150 mm, de préférence supérieure à 200 mm, de préférence encore entre 150 et 350 mm, de préférence encore entre 200 et 300 mm et en particulier est au moins sensiblement de 250 mm.
